# FASCICULE DE BREVET EUROPEEN

(11) **EP 3 548 308 B1**
(45) Date de publication et mention de la délivrance du brevet: **11.11.2020**
(21) Numéro de dépôt: 17816947.0
(22) Date de dépôt: 30.11.2017
(51) Int. Cl.: B60C 9/20, B60C 1/00, B60C 9/22, B60C 9/00, D07B 1/06, D02G 3/48

(54) **PNEUMATIQUE COMPORTANT UNE ARMATURE DE SOMMET ALLÉGÉE**
REIFEN MIT EINER LEICHTEN GÜRTELVERSTÄRKUNG
TYRE INCLUDING A LIGHTWEIGHT CROWN REINFORCEMENT

(30) Priorité: 05.12.2016 FR 1661920
(43) Date de publication de la demande: 09.10.2019
(73) Titulaire: Compagnie Générale des Etablissements Michelin, 63000 Clermont-Ferrand (FR)
(72) Inventeur: SALGUES, Nathalie, 63040 Clermont-Ferrand Cedex 9 (FR); LARDJANE, Aurore, 63040 Clermont-Ferrand Cedex 9 (FR); DEGEORGES, Agnès, 63040 Clermont-Ferrand Cedex 9 (FR)
(74) Mandataire: Le Cam, Stéphane Georges Elie
(86) Numéro de dépôt international: PCT/FR2017/053305
(87) Numéro de publication internationale: WO 2018/104617

(56) Documents cités:
- EP-A1- 0 118 941
- FR-A1- 2 728 510
- FR-A1- 3 022 843
- US-A1- 2012 067 488

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Par ailleurs, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

Quelles que soient l'une de ces solutions telles que présentées précédemment, la présence d'une ou plusieurs couches d'éléments de renforcement supplémentaire conduit à une masse plus importante du pneumatique et à des coûts de fabrication des pneumatiques plus importants.

L'allégement des nappes sommet de travail peut alors s'obtenir par exemples par une augmentation du pas de répartition des câbles ou bien par l'utilisation d'éléments de renforcement de plus petit diamètre et de moindre section comme cela est par exemple décrit dans le document US-3240249. A noter que très souvent cette réduction de diamètre et de section des éléments de renforcement s'accompagne d'une augmentation de la ténacité de l'acier venant limiter ou compenser la pénalisation en termes de force rupture.

Il est ainsi connu d'utiliser des éléments de renforcement plus petits pour alléger les pneumatiques, la masse étant d'une part réduite par une quantité de métal moindre et d'autre part par le volume de mélanges élastomériques qui diminuent pour former les calandrages des couches d'éléments de renforcement.

Toutefois, la diminution de la quantité de métal ne va pas dans le sens de performances en termes d'endurance améliorées.

Notamment, lors d'un roulage accidentel sur un obstacle ponctuel de taille relativement importante, l'ensemble des nappes est soumis brutalement à une très grande déformation qui peut aller jusqu'à la rupture complète du bloc sommet. Ce type de dommage d'origine accidentelle est classiquement qualifié de « road hazard ».

Il s'avère que la tenue aux road hazards d'un pneumatique comportant des nappes sommet de travail allégées peut s'avérer très significativement amoindrie. Les efforts supplémentaires engendrés par la très grande déformation sont supportés par les nappes sommet de travail qui, étant allégées, se révèlent fortement sensibilisées au risque de rupture. Cette sensibilité à la rupture est en outre accrue dès lors que les éléments de renforcements sont soumis à des phénomènes d'oxydation.

Le document US 2012/067488 décrit un pneumatique comportant des câbles de nappe de travail de diamètres réduits par rapport à des conceptions plus usuelles.

Le document FR 3 022 843 décrit un pneumatique comportant de mélanges de s couches de calandrage des nappes de travail dont la valeur du module d'élasticité sous tension à 10 % d'allongement est réduite par rapport à des conceptions plus usuelles.

Le document EP 0 118 941 spécifie des valeurs de résistivité électrique concernant les mélanges constituant les couches de calandrage des nappes de travail.

Un but de l'invention est ainsi de fournir des pneumatiques pour véhicules "Poids-Lourds", de masse réduite tout en conservant des performances d'endurance et de tenue aux road hazards satisfaisantes.

Ce but est atteint selon l'invention par un pneumatique pour véhicule de type poids lourd, à armature de carcasse radiale comprenant une armature de sommet formée d'au moins deux couches de sommet de travail, chacune comportant des éléments de renforcement métalliques insérés entre deux couches de calandrage de mélange élastomérique comportant une charge renforçante constituée par au moins du noir de carbone, l'armature de sommet étant coiffée radialement d'une bande de roulement, ladite bande de roulement étant réunie à deux bourrelets par l'intermédiaire de deux flancs, l'armature de sommet comportant au moins une couche d'éléments de renforcement circonférentiels, les éléments de renforcement des couches de sommet de travail étant des câbles métalliques présentant un diamètre inférieur à 1.3 mm, au moins un fil de chaque câble métallique d'au moins une couche de sommet de travail étant de grade au moins UHT, le module d'élasticité sous tension à 10 % d'allongement d'au moins la couche de calandrage radialement la plus extérieure d'au moins la couche de sommet de travail radialement la plus extérieure étant inférieur à 8,5 MPa et au moins ladite couche de calandrage radialement la plus extérieure d'au moins la couche de sommet de travail radialement la plus extérieure présentant une résistivité électrique volumique ρ telle que log(ρ) est supérieur à 8.

Au sens de l'invention, le diamètre d'un élément de renforcement est le diamètre du cercle circonscrit à la section de l'élément de renforcement, mesuré dans une coupe du pneumatique perpendiculaire à la direction moyenne de l'élément de renforcement.

La résistivité électrique volumique ρ est mesurée en statique selon la norme ASTM D 257, ρ étant exprimé en ohm.cm.

Au sens de l'invention, un « fil de grade au moins UHT», est un fil présentant une résistance mécanique à la rupture R exprimée en MPa telle que R ≥ 4180 - 2130xD, D étant le diamètre du fil exprimé en mm.

Selon une réalisation préférée de l'invention, les éléments de renforcement d'au moins une couche de travail sont des câbles comprenant une couche interne de M fil(s) interne(s) et une couche externe de N fils externes, la couche externe étant enroulée autour de la couche interne.

De préférence selon cette variante avantageuse de l'invention, M=1 ou 2 et N=5, 6, 7, 8 ou 9, de préférence M=1 et N=5 ou 6, ou M=2 et N=7, 8 ou 9.

En d'autre termes, avantageusement selon cette réalisation préférée de l'invention, au moins un des fils interne ou externe, et de préférence encore chaque fil interne et externe, de chaque câble d'au moins une couche de travail présente une résistance mécanique à la rupture R exprimée en MPa telle que R ≥ 4180 - 2130xD, D étant le diamètre du fil exprimé en mm.

De préférence encore selon l'invention, au moins un des fils interne ou externe, de préférence chaque fil interne et externe, de chaque câble d'au moins une couche de travail présente une résistance mécanique à la rupture R exprimée en MPa telle que R ≥ 4400 - 2000xD, D étant le diamètre du fil exprimé en mm

De préférence encore selon l'invention, les éléments de renforcement des couches de sommet de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

Et préférentiellement encore selon l'invention, les éléments de renforcement desdites au moins deux couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

Les résultats obtenus avec des pneumatiques conformes à l'invention ont effectivement mis en évidence que les performances en termes d'endurance peuvent être conservées notamment lors de roulage sur sol caillouteux, l'armature de sommet du pneumatique étant allégée.

Contre toute attente, les résultats ont effectivement mis en évidence que les pneumatiques selon l'invention peuvent être allégés en diminuant notamment la masse métal des couches de sommet de travail tout en conservant les propriétés d'endurance du sommet du pneumatique notamment à l'égard de chocs apparaissant sur la bande de roulement par exemple lors de roulage sur sol caillouteux.

Les essais réalisés ont montré que l'utilisation des mélanges élastomériques selon l'invention comportant une charge renforçante constituée par au moins du noir de carbone, présentant un module d'élasticité sous tension à 10 % d'allongement inférieur à 8,5 MPa et une résistivité électrique volumique ρ telle que log(ρ) supérieur à 8, pour réaliser au moins la couche de calandrage radialement la plus extérieure d'au moins la couche de sommet de travail radialement la plus extérieure permet d'améliorer les propriétés du pneumatique en termes d'endurance.

Les inventeurs pensent avoir notamment mis en évidence que le choix de mélanges selon l'invention pour réaliser au moins ladite couche de calandrage radialement la plus extérieure d'au moins la couche de sommet de travail radialement la plus extérieure qui conduisent notamment à une couche de calandrage faiblement conductrice, en comparaison de mélanges plus usuels, limite les phénomènes de corrosion des éléments de renforcement de la couche de sommet de travail radialement la plus extérieure.

Par ailleurs, les modules d'élasticité sous tension à 10 % d'allongement des calandrages des couches de sommet de travail conformes à l'invention semblent favorables aux performances en termes d'endurance lors de roulage sur des sols caillouteux. Habituellement, les modules d'élasticité sous tension à 10 % d'allongement des calandrages des couches de sommet de travail sont supérieurs à 8.5 MPa et le plus souvent supérieurs à 10 MPa. De tels modules d'élasticité sont notamment requis pour permettre de limiter les mises en compression des éléments de renforcement des couches de sommet de travail notamment lorsque le véhicule suit un parcours sinueux, lors de manœuvres sur les parkings ou bien lors du passage de ronds-points. En effet, les cisaillements selon la direction axiale qui s'opèrent sur la bande de roulement dans la zone de la surface de contact avec le sol conduisent à la mise en compression des éléments de renforcement d'une couche de sommet de travail.

Les inventeurs ont su mettre en évidence que la couche d'élément de renforcement circonférentiels autorise des choix de modules d'élasticité des mélanges caoutchouteux des couches de calandrages des couches de sommet de travail plus faibles sans nuire aux propriétés d'endurance du pneumatique du fait des mises en compression des éléments de renforcement desdites couches de sommet de travail telles que décrites précédemment.

Les inventeurs ont encore su mettre en évidence que la cohésion des couches de calandrages des couches de sommet de travail, lorsqu'elles présentent un module d'élasticité sous tension à 10 % d'allongement inférieur à 8.5 MPa, reste satisfaisante.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » (J/m²). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :
- Une accommodation de l'éprouvette « PS », de 1000 cycles à 27% de déformation.
- une caractérisation énergétique pour déterminer la loi « E » = f (déformation). Le taux de restitution d'énergie « E » est égal à W0^{∗}h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.
- La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont notamment mis en évidence que la présence d'au moins une couche d'éléments de renforcement circonférentiels contribue à une moindre évolution de la cohésion des couches de calandrages des couches de sommet de travail. En effet, les conceptions de pneumatiques plus usuelles comportant notamment des couches de calandrages des couches de sommet de travail avec des modules d'élasticité sous tension à 10 % d'allongement supérieurs à 8.5 MPa, conduisent à une évolution de la cohésion desdites couches de calandrages des couches de sommet de travail, celle-ci tendant à s'affaiblir. Les inventeurs constatent que la présence d'au moins une couche d'éléments de renforcement circonférentiels qui contribue à limiter les mises en compression des éléments de renforcement des couches de sommet de travail notamment lorsque le véhicule suit un parcours sinueux et en outre, limite les augmentations de température conduit à une faible évolution de la cohésion des couches de calandrages. Les inventeurs considèrent ainsi que la cohésion des couches de calandrages des couches de sommet de travail, plus faible que ce qui existe dans les conceptions de pneumatiques plus usuelles, est satisfaisante dans la conception du pneumatique selon l'invention.

Avantageusement selon l'invention, l'ensemble des couches de calandrage des couches de sommet de travail présente un module d'élasticité sous tension à 10 % d'allongement inférieur à 8,5 MPa et une résistivité électrique volumique ρ telle que log(p) est supérieur à 8.

Selon un mode de réalisation préféré de l'invention, la valeur maximale de tan(δ), noté tan(δ)max, d'au moins la couche de calandrage radialement la plus extérieure d'au moins la couche de sommet de travail radialement la plus extérieure, est inférieure à 0.080 et de préférence inférieure à 0.070.

De préférence, l'ensemble des couches de calandrage des couches de sommet de travail présente une valeur maximale de tan(δ), noté tan(δ)max, inférieure à 0.080 et de préférence inférieure à 0.070.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ) mesuré sur le cycle retour. Pour le cycle retour, on indique la valeur maximale de tan(δ) observée, noté tan(δ)ₘₐₓ.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de tan(δ) mesurée entre 30 et 100°C. La valeur de tan(δ) à 100 °C correspond ainsi à un indicateur de la résistance au roulement du pneumatique en roulage.

Les inventeurs ont encore su mettre en évidence que le choix de mélanges selon ce mode de réalisation préféré de l'invention pour réaliser au moins la couche de calandrage radialement la plus extérieure d'au moins la couche de sommet de travail radialement la plus extérieure permet d'améliorer les propriétés du pneumatique en matière de résistance au roulement, du fait de la valeur relativement faible de la valeur maximale de tan(δ), noté tan(δ)max.

Selon un mode de réalisation préféré de l'invention, au moins la couche de calandrage radialement la plus extérieure d'au moins la couche de sommet de travail radialement la plus extérieure est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 30 et 260 m²/g.

La mesure de surface spécifique BET du noir de carbone est effectuée selon la méthode de BRUNAUER, EMMET et TELLER décrite dans "The Journal of the American Chemical Society", vol. 60, page 309, février 1938, correspondant à la norme D6556-10.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Avantageusement selon une variante de réalisation de l'invention, les éléments de renforcement métalliques d'au moins la couche de sommet de travail radialement la plus extérieure sont des câbles présentant au test dit de perméabilité un débit inférieur à 5 cm³/min.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/min présentent un taux de pénétration supérieure à 66%.

Des câbles présentant au test dit de perméabilité un débit inférieur à 2 cm3/min présentent un taux de pénétration supérieure à 90%.

Avantageusement selon cette variante de l'invention, la valeur au test dit de perméabilité des éléments de renforcement métalliques d'au moins la couche de sommet de travail radialement la plus extérieure peut être obtenue avec des mélanges des couches de calandrage présentant une fluidité supérieure à celles des mélanges plus usuels.

De telles valeurs au test dit de perméabilité semblent encore améliorer l'endurance des pneumatiques notamment lors d'agressions particulièrement sévères des pneumatiques conduisant à un accès pour les agents oxydants aux éléments de renforcement d'au moins la couche de sommet de travail radialement la plus extérieure. En effet, une plus grande pénétration des éléments de renforcement métalliques d'au moins la couche de sommet de travail radialement la plus extérieure par les mélanges de calandrage est bénéfique à une moindre propagation des agents oxydants au sein des éléments de renforcement. Dans le cas d'agression pouvant libérer l'accès pour les agents oxydants aux éléments de renforcement, une telle pénétration des éléments de renforcement limite les contacts directs entre les agents oxydants et les éléments de renforcement métalliques. L'oxydation des éléments de renforcement continue alors à se faire essentiellement du fait du passage des agents oxydants jusqu'à la couche de calandrage, l'intensité de l'oxydation étant diminuée par le choix des mélanges constituant au moins le calandrage radialement extérieur d'au moins la couche de sommet de travail radialement la plus extérieure qui présentent une faible conductivité électrique.

Selon un mode de réalisation préférée de l'invention, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche C de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Selon une variante de réalisation de l'invention, les éléments de renforcement desdites au moins deux couches de sommet de travail sont croisés d'une couche à l'autre en faisant avec la direction circonférentielle des angles compris entre 10° et 45°.

De préférence encore, les éléments de renforcement desdites au moins deux couches de sommet de travail sont inextensibles.

Une réalisation préférée de l'invention prévoit encore que l'armature de sommet est complétée radialement à l'extérieur par au moins une couche supplémentaire, dite de protection, orientés par rapport à la direction circonférentielle avec un angle compris entre 10° et 45° et de même sens que l'angle formé par les éléments inextensibles de la couche de travail qui lui est radialement adjacente.

Avantageusement selon l'invention, les éléments de renforcement de ladite au moins une couche de protection sont élastiques.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

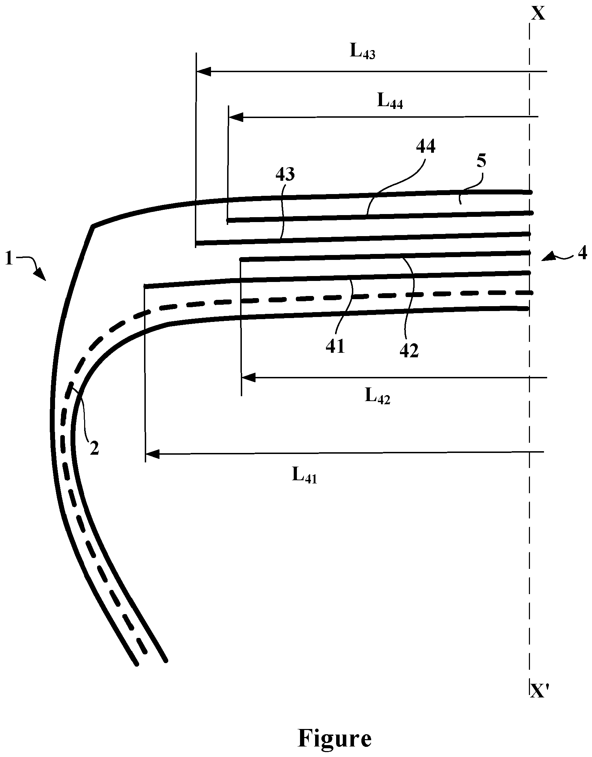

D'autres détails et caractéristiques avantageux de l'invention ressortiront ci-après de la description d'un exemple de réalisation de l'invention en référence à la figure qui représente une vue méridienne d'un schéma d'un pneumatique selon un mode de réalisation de l'invention.

La figure n'est pas représentée à l'échelle pour en simplifier la compréhension.

La figure ne représente qu'une demi-vue d'un pneumatique qui se prolonge de manière symétrique par rapport à l'axe XX' qui représente le plan médian circonférentiel, ou plan équatorial, du pneumatique.

Sur la figure, le pneumatique 1, de dimension 295/80 R 22.5, comprend une armature de carcasse radiale 2 ancrée dans deux bourrelets, non représentés sur la figure. L'armature de carcasse 2 est formée d'une seule couche de câbles métalliques. Il comporte encore une bande de roulement 5.

Sur la figure, l'armature de carcasse 2 est frettée conformément à l'invention par une armature de sommet 4, formée radialement de l'intérieur à l'extérieur :
- d'une première couche de travail 41 formée de câbles métalliques orientés d'un angle égal à 26°,
- d'une couche d'éléments de renforcement circonférentiels 42 formée de câbles métalliques en acier 21x23, de type "bi-module",
- d'une seconde couche de travail 43 formée de câbles métalliques orientés d'un angle égal à 18° et croisés avec les câbles métalliques de la première couche de travail, les câbles de chacune des couches de travail étant orientés de part et d'autre de la direction circonférentielle,
- d'une couche de protection 44 formées de câbles métalliques élastiques 18.23, dont le pas de répartition est égal à 2.5 mm, orientés d'un angle égal à 18°, du même côté que les câbles de la seconde couche de travail.

La largeur axiale L₄₁ de la première couche de travail 41 est égale à 214 mm.

La largeur axiale L₄₂ de la couche d'éléments de renforcement circonférentiels 42 est égale à 154 mm.

La largeur axiale L₄₃ de la deuxième couche de travail 43 est égale à 194 mm.

La largeur axiale L₄₄ de la couche de protection 44 est égale à 162 mm.

Les éléments de renforcement des deux couches de travail sont des câbles métalliques de formule 9.30, de type UHT présentant un diamètre égal à 1.23 mm. Ils sont répartis dans chacune des couches de travail avec un pas P égal à 2.25 mm.

Les fils constituant les câbles métalliques présentent une résistance mécanique à la rupture R égale à 3556 MPa et satisfont donc la relation R ≥ 4180 - 2130xD.

Conformément à l'invention, le module d'élasticité sous tension à 10 % d'allongement des couches de sommet de travail 42 et 43 est inférieur à 8.5 MPa et la valeur de log (p) qui exprime la résistivité électrique des couches de calandrage de la couche de protection 43 est supérieure à 8.

La valeur maximale de tan(δ), noté tan(δ)max, des couches de calandrage des couches de sommet de travail 42 et 43 est inférieure à 0.080.

La masse cumulée des couches de travail, de la couche de protection et de la couche d'éléments de renforcement circonférentiels du pneumatique de référence, comprenant la masse des câbles métalliques et des mélanges de calandrage, se monte à 9.8 Kg.

Le pneumatique I selon l'invention est comparé à un pneumatique T1 de référence de même dimension qui diffère du pneumatique selon l'invention par des câbles métalliques des deux couches de travail qui sont des câbles de formule 9.35 de type SHT, présentant un diamètre égal 1.35 mm. Ils sont répartis dans chacune des couches de travail avec un pas égal à 2.5 mm.

La masse cumulée des couches de travail, de la couche de protection et de la couche de triangulation du pneumatique de référence T1, comprenant la masse des câbles métalliques et des mélanges de calandrage, se monte à 10.4 Kg.

Les pneumatiques T de référence diffèrent encore des pneumatiques I selon l'invention par les mélanges de calandrages des couches de sommet de travail 41 et 43, notamment leur module d'élasticité sous tension à 10 % d'allongement et la valeur de log(p), ρ étant exprimé en ohm.cm.

Le pneumatique I selon l'invention est encore comparé à un deuxième pneumatique T2 qui diffère du pneumatique selon l'invention uniquement par la nature des calandrages des couches de travail identiques à ceux du pneumatique T1.

Les différents mélanges utilisés sont listés ci-après.

| | Mélange R1 | Mélange R2 | Mélange 1 | Mélange 2 | Mélange 3 |
|---|---|---|---|---|---|
| NR | 100 | 100 | 100 | 100 | 100 |
| Noir N347 | 52 | | 33 | | |
| Noir N683 | | | | 44 | 30 |
| Noir N326 | | 47 | | | |
| Antioxydant (6PPD) | 1 | 1.5 | 1 | 1 | 1 |
| Acide stéarique | 0.65 | 0.9 | 0.65 | 0.65 | 0.65 |
| Oxyde de zinc | 9.3 | 7.5 | 9.3 | 9.3 | 9.3 |
| Sel de Cobalt (AcacCo) | 1.12 | 1.12 | 1.12 | 1.12 | 1.12 |
| soufre | 6.1 | 4.5 | 6.1 | 6.1 | 6.1 |
| Accélérateur DCBS | 0.93 | 0.8 | 0.93 | 0.93 | 0.93 |
| Retardateur CTP PVI) | 0.25 | 0.15 | 0.25 | 0.25 | 0.25 |
| MA₁₀ (MPa) | 10.4 | 5.99 | 5.56 | 6.16 | 4.4 |
| tan(δ)ₘₐₓ | 0.130 | 0.099 | 0.074 | 0.056 | 0.030 |
| Résisitivité (logrho) | 4 | 6 | >10 | 9 | >10 |

Les pneumatiques I selon l'invention sont réalisés avec des couches de sommet de travail dont les calandrages sont constitués des mélanges choisi parmi les mélanges 1 à 3.

Des pneumatiques de référence T1 et T2 sont réalisés avec des couches de sommet de travail dont les calandrages sont constitués du mélange R1 ou du mélange R2.

Des essais ont été réalisés avec des pneumatiques I réalisés selon l'invention et avec des pneumatiques T1 de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques T1 de référence.

Les essais ainsi réalisés ont montré que les distances parcourues lors de chacun de ces tests sont sensiblement identiques pour les pneumatiques selon l'invention et les pneumatiques T1 de référence. Il apparaît donc que les pneumatiques selon l'invention présentent des performances sensiblement équivalentes en termes d'endurance à celles des pneumatiques T1 de référence lors de roulage sur des sols bitumineux.

Des tests visant à caractériser la résistance à la rupture d'une armature de sommet de pneumatique soumise à des chocs ont également été réalisés. Ces tests consistent en l'enfoncement de polars de forme cylindrique sur la bande de roulement du pneumatique gonflé à une pression recommandée. Les valeurs expriment l'énergie nécessaire pour obtenir la rupture du bloc sommet. Les valeurs sont exprimées à partir d'une base 100 correspondant à la valeur mesurée pour le pneumatique de référence.

| T1 | 100 |
|---|---|
| Invention | 99 |

Ces résultats montrent que malgré un allégement du pneumatique par une diminution de la masse de son armature sommet, l'énergie à rupture lors d'un choc sur la surface de la bande de roulement est sensiblement équivalente.

D'autres essais correspondant à des essais d'endurance ont été réalisés par roulage avec des véhicules circulant sur une surface de roulement constituée de cailloux agressifs qui viennent se coincer dans les zones en creux de la sculpture de la bande de roulement des pneumatiques. Les véhicules passent ensuite dans un bac de solution saline pour permettre au liquide corrosif de se propager au sein du pneumatique via les fissures formées du fait des agressions causées par les cailloux.

Après un roulage suffisant, les éléments de renforcement des couches de sommet de travail sont analysés. Les mesures effectuées correspondent à des longueurs d'éléments de renforcement corrodées et des nombres de ruptures desdits éléments de renforcement.

Des mesures identiques sont effectuées sur les pneumatiques I réalisés selon l'invention après un kilométrage parcouru identique à celui des pneumatiques T2 dans les mêmes conditions.

Les résultats sont exprimés dans le tableau qui suit en référence à une base 100 fixé pour les pneumatiques de référence T2. On fixe une base 100 d'une part pour les longueurs d'éléments de renforcement corrodées et une autre base 100 pour le dénombrement de ruptures d'éléments de renforcement.

| | Pneumatique T2 | Pneumatique I |
|---|---|---|
| Longueur corrodée | 100 | 80 |
| Nombre de ruptures | 100 | 70 |

Ces essais montrent notamment que la conception des pneumatiques selon l'invention permet de retarder la corrosion des éléments des couches de sommet de travail et est donc favorable aux performances en termes d'endurance des pneumatiques, malgré un allégement du pneumatique par une diminution de la masse de son armature sommet.

Ces mêmes essais ont été reproduits sur des pneumatiques conformes à l'invention dans lesquels les mélanges élastomériques constituant les couches de calandrage de la couche de protection sont identiques aux mélanges utilisés pour les couches de calandrage des couches de sommet de travail.

Comme précédemment, après un roulage suffisant, les éléments de renforcement des couches de sommet de travail mais aussi les éléments de renforcement de la couche de protection sont analysés. Comme précédemment, les mesures effectuées correspondent à des longueurs d'éléments de renforcement corrodées et des nombres de ruptures desdits éléments de renforcement.

| | Pneumatique T2 | Pneumatique I |
|---|---|---|
| Longueur corrodée dans la couche de protection | 100 | 80 |
| Nombre de ruptures dans la couche de protection | 100 | 70 |
| Longueur corrodée dans les couches de travail | 100 | 70 |
| Nombre de ruptures dans les couches de travail | 100 | 60 |

Il ressort de ces essais que le choix d'utiliser les mélanges identiques pour la couche de protection et les couches de travail permet de retarder la corrosion des éléments de renforcement de la couche de protection et retardent d'avantage la corrosion des éléments de renforcement des couches de sommet de travail.

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique de référence T2.

| T2 | 100 |
|---|---|
| Invention | 98 |

## Revendications

1. Pneumatique pour véhicule de type poids lourd, à armature de carcasse radiale comprenant une armature de sommet formée d'au moins deux couches de sommet de travail chacune comportant des éléments de renforcement métalliques insérés entre deux couches de calandrage de mélange élastomérique comportant une charge renforçante constituée par au moins du noir de carbone, l'armature de sommet étant coiffée radialement d'une bande de roulement, ladite bande de roulement étant réunie à deux bourrelets par l'intermédiaire de deux flancs, l'armature de sommet comportant au moins une couche d'éléments de renforcement circonférentiels, **caractérisé en ce que** les éléments de renforcement des couches de sommet de travail sont des câbles métalliques présentant un diamètre inférieur à 1.3 mm, **en ce qu'**au moins un fil de chaque câble métallique d'au moins une couche de sommet de travail est de grade au moins UHT, **en ce que** le module d'élasticité sous tension à 10 % d'allongement d'au moins la couche de calandrage radialement la plus extérieure d'au moins la couche de sommet de travail radialement la plus extérieure est inférieur à 8,5 MPa et **en ce qu'**au moins ladite couche de calandrage radialement la plus extérieure d'au moins la couche de sommet de travail radialement la plus extérieure présente une résistivité électrique volumique p, exprimée en ohm.cm, telle que log(p) est supérieur à 8.

2. Pneumatique selon la revendication 1, **caractérisé en ce que** la valeur maximale de tan(δ), noté tan(δ)max, d'au moins ladite couche de calandrage radialement la plus extérieure d'au moins la couche de sommet de travail radialement la plus extérieure est inférieure à 0.080.

3. Pneumatique selon l'une des revendications 1 ou 2, **caractérisé en ce qu'**au moins ladite couche de calandrage radialement la plus extérieure d'au moins la couche de sommet de travail radialement la plus extérieure est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g employé à un taux compris entre 20 et 40 pce,
b) soit par du noir de carbone de surface spécifique BET inférieure à 60 m²/g employé à un taux compris entre 20 et 80 pce, et de préférence entre 30 et 50 pce,
c) soit par un coupage de noir de carbone décrit en (a) et/ou de noir de carbone décrit en (b) et/ou une charge blanche, dans lequel le taux global de charge est compris entre 20 et 80 pce, et de préférence entre 40 et 60 pce, ladite charge blanche étant de type silice et/ou alumine, comportant des fonctions de surface SiOH et/ou AlOH choisie dans le groupe formé par les silices précipitées ou pyrogénées, les alumines ou les aluminosilicates, ou bien encore les noirs de carbone modifiés en cours ou après la synthèse, de surface spécifique BET comprise entre 30 et 260 m²/g.

4. Pneumatique selon l'une des revendications précédentes, **caractérisé en ce que** les éléments de renforcement d'au moins une couche de sommet de travail sont des câbles comprenant une couche interne de M fil(s) interne(s) et une couche externe de N fils externes, la couche externe étant enroulée autour de la couche interne.

5. Pneumatique selon la revendication 4, **caractérisé en ce que** M=1 et N=5 ou 6 ou M=2 et N=7, 8 ou 9.

6. Pneumatique selon l'une des revendications 4 ou 5, **caractérisé en ce que** les éléments de renforcement des couches de sommet de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4180 - 2130xD, D étant le diamètre du fil exprimé en mm.

7. Pneumatique selon l'une des revendications 4 à 6, **caractérisé en ce que** les éléments de renforcement desdites au moins deux couches de travail sont des câbles comprenant une couche interne de M fil(s) interne(s) et une couche externe de N fils externes, la couche externe étant enroulée autour de la couche interne, avec M=1 ou 2 et N=5, 6, 7, 8, au moins un des fils interne ou externe, de chaque câble, et de préférence chaque fil interne et externe de chaque câble, présentant une résistance mécanique à la rupture R exprimée en MPa telle que R ≥ 4400 - 2000xD, D étant le diamètre du fil exprimé en mm.

8. Pneumatique selon l'une des revendications précédentes, **caractérisé en ce que** les éléments de renforcement métalliques d'au moins ladite couche de protection sont des câbles présentant au test dit de perméabilité un débit inférieur à 5 cm³/min.

9. Pneumatique selon l'une des revendications précédentes, **caractérisé en ce que** la couche d'éléments de renforcement circonférentiels est radialement disposée entre deux couches de sommet de travail.

10. Pneumatique selon l'une des revendications précédentes, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

11. Pneumatique selon l'une des revendications précédentes, **caractérisé en ce que** les éléments de renforcement desdites au moins deux couches de sommet de travail sont croisés d'une couche à l'autre en faisant avec la direction circonférentielle des angles compris entre 10° et 45°.

12. Pneumatique selon l'une des revendications précédentes, **caractérisé en ce que** les éléments de renforcement desdites au moins deux couches de sommet de travail sont des câbles métalliques inextensibles.

13. Pneumatique selon l'une des revendications précédentes, **caractérisé en ce que** l'armature de sommet est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

14. Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 60°.

## Patentansprüche

1. Reifen für ein Lastfahrzeug mit radialer Karkassenarmierung umfassend eine Scheitelarmierung, die von mindestens zwei Arbeitsscheitelschichten gebildet ist, jeweils aufweisend metallische Verstärkungselemente, die zwischen zwei Kalandrierschichten aus einer Elastomermischung aufweisend einen verstärkenden Füllstoff, der zumindest von Ruß gebildet ist, eingefügt sind, wobei die Scheitelarmierung radial von einem Laufstreifen bedeckt ist, wobei der Laufstreifen über zwei Flanken mit zwei Wülsten verbunden ist, die Scheitelarmierung aufweisend mindestens eine Schicht aus Umfangsverstärkungselementen, **dadurch gekennzeichnet, dass** die Verstärkungselemente der Arbeitsscheitelschichten Metallseile sind, die einen Durchmesser kleiner als 1,3 mm aufweisen, dadurch, dass mindestens ein Draht jedes Metallseils mindestens einer Arbeitsscheitelschicht zumindest dem UHT-Grad entspricht, dadurch, dass der Elastizitätsmodul unter Spannung bei 10 % Dehnung zumindest der radial am weitesten außen gelegenen Kalandrierschicht zumindest der Arbeitsscheitelschicht, die radial am weitesten außen gelegen ist, kleiner als 8,5 MPa ist, und dadurch, dass zumindest die radial am weitesten außen gelegene Kalandrierschicht zumindest der Arbeitsscheitelschicht, die radial am weitesten außen gelegen ist, einen spezifischen elektrischen Volumenwiderstand ρ aufweist, der in ohm.cm ausgedrückt ist, so dass log(p) größer als 8 ist.

2. Reifen nach Anspruch 1, **dadurch gekennzeichnet, dass** der Maximalwert von tan(δ), der mit tan(δ)max angegeben ist, zumindest der radial am weitesten außen gelegenen Kalandrierschicht zumindest der Arbeitsscheitelschicht, die radial am weitesten außen gelegen ist, kleiner als 0,080 ist.

3. Reifen nach einem der Ansprüche 1 oder 2, **dadurch gekennzeichnet, dass** zumindest die radial am weitesten außen gelegene Kalandrierschicht zumindest der Arbeitsscheitelschicht, die am weitesten außen gelegen ist, eine Elastomermischung auf Basis von Naturkautschuk oder synthetischem Polyisopren mit einer Mehrheit von cis-1,4-Ketten und eventuell mindestens einem anderen Dienelastomer ist, wobei der Naturkautschuk oder das synthetische Polyisopren im Falle eines Verschnitts in einem Mehrheitsanteil im Verhältnis zum Anteil des anderen oder der anderen genutzten Dienelastomere vorhanden ist, und von einem verstärkenden Füllstoff, der von Folgendem gebildet ist:
a) entweder von Ruß mit einer spezifischen BET-Oberfläche größer als 60 m²/g, der zu einem Anteil zwischen 20 und 40 pce eingesetzt wird,
b) oder von Ruß mit einer spezifischen BET-Oberfläche kleiner als 60 m²/g, der zu einem Anteil zwischen 20 und 80 pce und vorzugsweise zwischen 30 und 50 pce eingesetzt wird,
c) oder von einem Verschnitt aus Ruß, der in (a) beschrieben ist, und/oder Ruß, der in (b) beschrieben ist, und/oder einem weißen Füllstoff, wobei der Gesamt-Füllstoffanteil zwischen 20 und 80 pce und vorzugsweise zwischen 40 und 60 pce liegt, wobei der weiße Füllstoff vom Typ Kieselsäure und/oder Tonerde ist, aufweisend SiOH- und/oder AlOH-Oberflächenfunktionen, der aus der Gruppe gewählt ist, die von gefällten oder pyrogenen Kieselsäuren, Tonerden oder Aluminosilicaten oder auch Rußen gebildet ist, die bei oder nach der Synthese modifiziert wurden, mit einer spezifischen BET-Oberfläche, die zwischen 30 und 260 m²/g liegt.

4. Reifen nach einem der vorhergehenden Ansprüche, **dadurch gekennzeichnet, dass** die Verstärkungselemente mindestens einer Arbeitsscheitelschicht Seile sind, die eine Innenschicht aus M Innendraht/Innendrähten und eine Außenschicht aus N Außendrähten umfassen, wobei die Außenschicht um die Innenschicht gerollt ist.

5. Reifen nach Anspruch 4, **dadurch gekennzeichnet, dass** M=1 und N=5 oder 6 oder M=2 und N=7, 8 oder 9.

6. Reifen nach einem der Ansprüche 4 oder 5, **dadurch gekennzeichnet, dass** die Verstärkungselemente der Arbeitsscheitelschichten Seile sind, die eine Innenschicht aus M Innendraht/Innendrähten und eine Außenschicht aus N Außendrähten umfassen, wobei die Außenschicht um die Innenschicht gerollt ist, wobei M=1 oder 2 und N=5, 6, 7, 8, wobei mindestens einer der Innen- oder Außendrähte jedes Seils und vorzugsweise jeder Innen- und Außendraht jedes Seils eine mechanische Reißfestigkeit R aufweist, die in MPa ausgedrückt ist, so dass R ≥ 4180 - 2130 x D, wobei D der Durchmesser des Drahtes ist, der in mm ausgedrückt ist.

7. Reifen nach einem der Ansprüche 4 bis 6, **dadurch gekennzeichnet, dass** die Verstärkungselemente der mindestens zwei Arbeitsschichten Seile sind, die eine Innenschicht aus M Innendraht/Innendrähten und eine Außenschicht aus N Außendrähten umfassen, wobei die Außenschicht um die Innenschicht gerollt ist, wobei M=1 oder 2 und N=5, 6, 7, 8, wobei mindestens einer der Innen- oder Außendrähte jedes Seils und vorzugsweise jeder Innen- und Außendraht jedes Seils eine mechanische Reißfestigkeit R aufweist, die in MPa ausgedrückt ist, so dass R ≥ 4400 - 2000 x D, wobei D der Durchmesser des Drahtes ist, der in mm ausgedrückt ist.

8. Reifen nach einem der vorhergehenden Ansprüche, **dadurch gekennzeichnet, dass** die metallischen Verstärkungselemente zumindest der Schutzschicht Seile sind, die bei der Durchlässigkeitsprüfung einen Durchsatz unter 5 cm³/min aufweisen.

9. Reifen nach einem der vorhergehenden Ansprüche, **dadurch gekennzeichnet, dass** die Schicht aus Umfangsverstärkungselementen radial zwischen zwei Arbeitsscheitelschichten angeordnet ist.

10. Reifen nach einem der vorhergehenden Ansprüche, **dadurch gekennzeichnet, dass** die Verstärkungselemente mindestens einer Schicht aus Umfangsverstärkungselementen metallische Verstärkungselemente sind, die einen Sekantenmodul bei 0,7 % Dehnung zwischen 10 und 120 GPa und einen maximalen Tangentenmodul kleiner als 150 GPa aufweisen.

11. Reifen nach einem der vorhergehenden Ansprüche, **dadurch gekennzeichnet, dass** die Verstärkungselemente der mindestens zwei Arbeitsscheitelschichten von einer Schicht zur anderen gekreuzt sind, wobei sie mit der Umfangsrichtung Winkel zwischen 10° und 45° bilden.

12. Reifen nach einem der vorhergehenden Ansprüche, **dadurch gekennzeichnet, dass** die Verstärkungselemente der mindestens zwei Arbeitsscheitelschichten nicht dehnbare Metallseile sind.

13. Reifen nach einem der vorhergehenden Ansprüche, **dadurch gekennzeichnet, dass** die Scheitelarmierung von mindestens einer zusätzlichen Lage, Schutzlage genannt, aus elastischen Verstärkungselementen radial außen vervollständigt wird, die bezogen auf die Umfangsrichtung mit einem Winkel zwischen 10° und 45° und derselben Richtung wie der Winkel, der von den nicht dehnbaren Elementen der Arbeitslage gebildet ist, die ihr radial benachbart ist, ausgerichtet sind.

14. Reifen nach einem der vorhergehenden Ansprüche, **dadurch gekennzeichnet, dass** die Scheitelarmierung ferner eine Triangulationsschicht aufweist, die von metallischen Verstärkungselementen gebildet ist, die mit der Umfangsrichtung Winkel größer als 60° bilden.

## Claims

1. Tyre for a vehicle of heavy duty type, having a radial carcass reinforcement comprising a crown reinforcement formed of at least two working crown layers each comprising metal reinforcing elements inserted between two calendering layers of elastomer compound comprising a reinforcing filler consisting of at least carbon black, the crown reinforcement being capped radially by a tread, said tread being connected to two beads via two sidewalls, the crown reinforcement comprising at least one layer of circumferential reinforcing elements, **characterized in that** the reinforcing elements of the working crown layers are metal cords having a diameter of less than 1.3 mm, **in that** at least one thread of each metal cord of at least one working crown layer is of at least UHT grade, **in that** the tensile elastic modulus at 10% elongation of at least the radially outermost calendering layer of at least the radially outermost working crown layer is less than 8.5 MPa, and **in that** at least said radially outermost calendering layer of at least the radially outermost working crown layer has an electrical resistivity per unit volume p, expressed in ohm.cm, such that log(p) is greater than 8.

2. Tyre according to Claim 1, **characterized in that** the maximum value of tan(δ), denoted tan(δ)max, of at least said radially outermost calendering layer of at least the radially outermost working crown layer is less than 0.080.

3. Tyre according to either of Claims 1 and 2, **characterized in that** at least said radially outermost calendering layer of at least the radially outermost working crown layer is an elastomer compound based on natural rubber or on synthetic polyisoprene with a predominance of cis-1,4- linkages and optionally on at least one other diene elastomer, the natural rubber or synthetic polyisoprene in the case of a blend being present at a predominant content relative to the content of the other diene elastomer(s) used and of a reinforcing filler consisting
a) either of carbon black having a BET specific surface area of greater than 60 m2/g used at a content of between 20 and 40 phr,
b) or of carbon black having a BET specific surface area of less than 60 m2/g used at a content of between 20 and 80 phr and preferably of between 30 and 50 phr,
c) or of a blend of carbon black described in (a) and/or of carbon black described in (b) and/or a white filler, in which the overall filler content is between 20 and 80 phr, and preferably between 40 and 60 phr, said white filler being of silica and/or alumina type, comprising SiOH and/or AlOH surface functions selected from the group consisting of precipitated or fumed silicas, the aluminas or aluminosilicates, or else carbon blacks modified during or after synthesis, with a BET specific surface area of between 30 and 260 m2/g.

4. Tyre according to one of the preceding claims, **characterized in that** the reinforcing elements of at least one working crown layer are cords comprising an internal layer of M internal thread(s) and an external layer of N external threads, the external layer being wound around the internal layer.

5. Tyre according to Claim 2, **characterized in that** M=1 and N=5 or 6 or M=2 and N=7, 8 or 9.

6. Tyre according to either of Claims 4 and 5, **characterized in that** the reinforcing elements of the working crown layers are cords comprising an internal layer of M internal thread(s) and an external layer of N external threads, the external layer being wound around the internal layer, with M=1 or 2 and N=5, 6, 7 or 8, at least one of the internal or external threads of each cord, and preferably each internal and external thread of each cord, exhibiting a mechanical breaking strength R expressed in MPa such that R ≥ 4180 - 2130xD, D being the diameter of the thread expressed in mm.

7. Tyre according to one of Claims 4 to 6, **characterized in that** the reinforcing elements of said at least two working layers are cords comprising an internal layer of M internal thread(s) and an external layer of N external threads, the external layer being wound around the internal layer, with M=1 or 2 and N=5, 6, 7 or 8, at least one of the internal or external threads of each cord, and preferably each internal and external thread of each cord, exhibiting a mechanical breaking strength R expressed in MPa such that R ≥ 4400 - 2000xD, D being the diameter of the thread expressed in mm.

8. Tyre according to one of the preceding claims, **characterized in that** the metal reinforcing elements of at least said protective layer are cords having a flow rate of less than 5 cm³/min in what is referred to as the permeability test.

9. Tyre according to one of the preceding claims, **characterized in that** the layer of circumferential reinforcing elements is positioned radially between two working crown layers.

10. Tyre according to one of the preceding claims, **characterized in that** the reinforcing elements of at least one layer of circumferential reinforcing elements are metal reinforcing elements having a secant modulus at 0.7% elongation of between 10 and 120 GPa and a maximum tangent modulus of less than 150 GPa.

11. Tyre according to one of the preceding claims, **characterized in that** the reinforcing elements of said at least two working crown layers are crossed from one layer to the other, making angles of between 10° and 45° with the circumferential direction.

12. Tyre according to one of the preceding claims, **characterized in that** the reinforcing elements of said at least two working crown layers are inextensible metal cords.

13. Tyre according to one of the preceding claims, **characterized in that** the crown reinforcement is supplemented radially on the outside by at least one additional ply, referred to as a protective ply, of "elastic" reinforcing elements, oriented at an angle of between 10° and 45° relative to the circumferential direction and of the same direction as the angle formed by the inextensible working ply elements radially adjacent thereto.

14. Tyre according to one of the preceding claims, **characterized in that** the crown reinforcement also comprises a triangulation layer formed of metal reinforcing elements forming angles of greater than 60° with the circumferential direction.
